# EUROPEAN PATENT SPECIFICATION

(11) **EP 4 170 214 B1**
(45) Date of publication and mention of the grant of the patent: **02.04.2025**
(21) Application number: 22197760.6
(22) Date of filing: 26.09.2022
(51) Int. Cl.: F16L 3/26, H02G 3/04

(54) **SUPPORT STRUCTURE FOR CABLES AND/OR PIPES AND PROCESS OF MANUFACTURING THE SAME**
TRAGSTRUKTUR FÜR KABEL UND/ODER ROHRE UND VERFAHREN ZU DEREN HERSTELLUNG
STRUCTURE DE SUPPORT POUR CÂBLES ET/OU TUYAUX ET SON PROCÉDÉ DE FABRICATION

(30) Priority: 22.10.2021 IT 202100027158
(43) Date of publication of application: 26.04.2023
(73) Proprietor: Top Glass Industries S.p.A., 25128 Brescia BS (IT)
(72) Inventor: BRANCA, Alfonso, MILANO (IT)
(74) Representative: PGA S.p.A.

(56) References cited:
- EP-A1- 0 372 619
- EP-A1- 3 200 298
- US-A- 3 915 420

## Description

### FIELD OF THE INVENTION

The present invention relates to a support structure for cables and/or pipes for supporting and/or routing electrical cables, optical cables, cables of other nature, pipes, and the like.

The invention also relates to a process of manufacturing a cable support structure.

### PRIOR ART

As is known, there are commercially available ducts for example made of plastic or metal which are used for routing cables of various kinds along predetermined paths. Known cable ducts can have a profile conformation having one or more compartments in which cables can be placed. Cable ducts can be fixed to the floor, wall or ceiling also in order to hide and protect the cables housed therein. Cable supporting structures having the overall outline of a ladder and comprising two side rails connected by transversal rungs are also known. These structures typically attached to the ceiling can effectively support cables, cable bundles and pipes, thus providing support and at the same time easy access to internal components.

Although the solutions described are widely used, they were found to be further improvable.

### OBJECT OF THE INVENTION

A first objective of the present invention is to provide a robust support structure easily manufacturable. A further purpose of the present invention is to provide a support structure that can be made without or by minimizing the use of conventional bonding or bolting systems between parts.

Another object of the invention is to provide a support structure that can operate without functional problems even when loaded with cables, pipes or other components.

It is a further object of the present invention to provide a support structure having a high degree of operational reliability.

A further object is to provide a structure whose components can be made entirely of composite material and assembled easily and effectively.

These objects and others, which will become more apparent from the following description, are substantially achieved by a cable support structure for pipes and the like according to one or more of the appended claims and/or the following aspects.

US 3 915 420 A concerns a ladder shaped support comprising two longitudinal profiles and a plurality of crossties or rungs. Each crosstie has an open profile and requires an additional element to connect to the longitudinal profiles.

EP 0 372 619 A1 shows a support structure with two longitudinal profiles and a plurality of crossties. Each profile has two walls facing each other and emerging from the same side of a respective profile in the direction of the other profile, to define respective seats. Each wall has a respective rim emerging orthogonally from the wall in the direction of the other wall and configured to allow longitudinal sliding of crossties relative to the profile. Engagement between a profile and a crosstie is accomplished by insertion of the crossties at indents of the rims. The rims engage slots present at the cross tie ends. Glue is also preferably used to fix the connection.

EP 3 200 298 A1concerns a support structure presenting two longitudinal profiles and a plurality of crossties, each presenting an open "C" shaped profile. Each profile has an upper wall on which an upper rib is defined and a lower wall facing the upper wall on which a lower rib is defined. The upper rib of the upper wall of each profile has indents, at which the engagement of the crosstie with the profile can be made.

### SUMMARY

A support structure according to the invention is disclosed in any one of claims 1-11.

A process of manufacturing a support structure according to the invention is disclosed in any one of claims 12-13.

### BRIEF DESCRIPTION OF THE DRAWINGS

Some embodiments and some aspects of the invention are described hereinafter with reference to the accompanying drawings, provided only for illustrative and, therefore, non-limiting purposes, in which:
- Figure 1 is a sectional view of a support structure according to aspects of the invention;
- Figure 2 is a sectional view of the support structure of Figure 1 fixed to the ceiling and loaded with a plurality of cables;
- Figure 3 shows a variant of the support structure in Figure 1 wherein the structure includes an upper cover and a lower closure cover;
- Figure 4 is an interrupted plan view of the support structure of Figure 2;
- Figure 5 shows a perspective view of a longitudinal portion of the support structure in Figure 1; and
- Figure 6 shows in perspective view an exploded detail of the end of a crosstie and a corresponding seat present in a profile of the structures in the preceding figures. The coupling of the opposing end of the crosstie with the other of the two profiles forming part of the support structure is analogous to what is shown in Figure 6.

### DETAILED DESCRIPTION

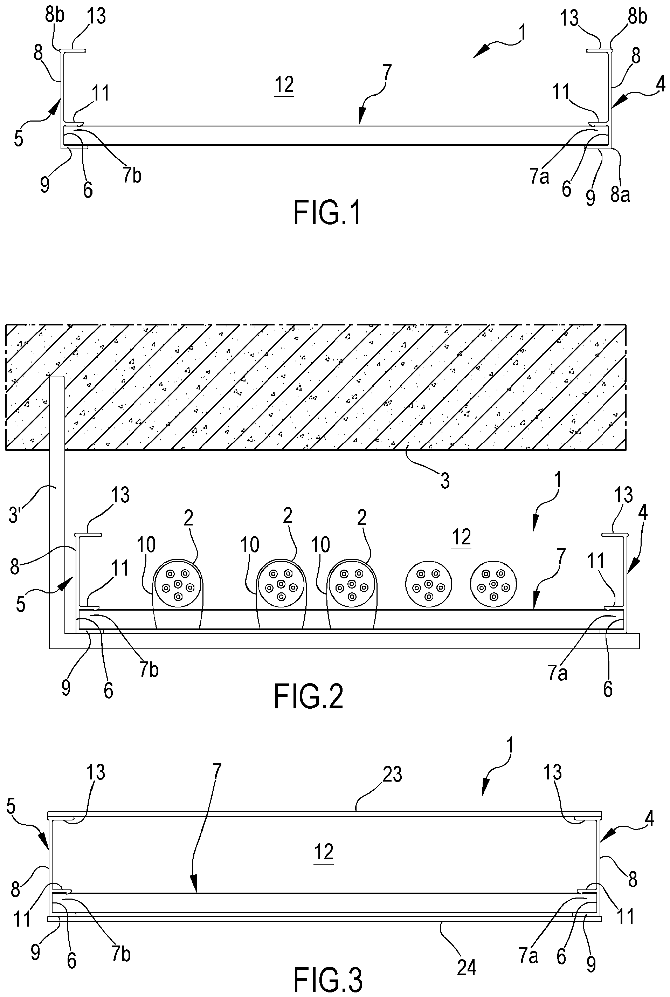

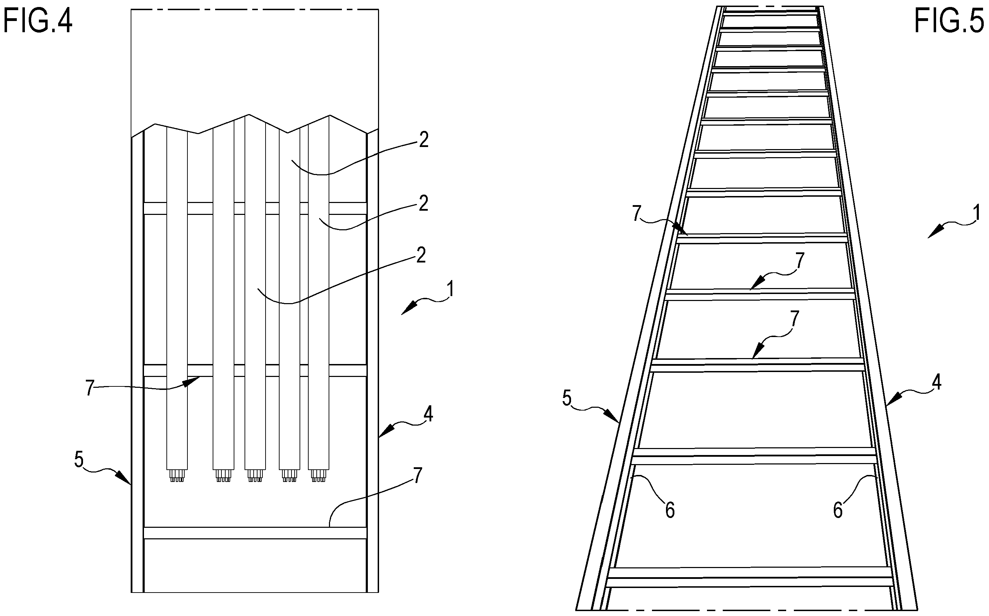

The invention concerns a structure 1 for supporting cables and/or pipes, e.g. usable in the civil and/or industrial fields for supporting and/or routing electrical cables, optical cables, cables of other nature, pipes, and the like, indicated with reference 2 in Figures 2 and 4. As can be seen from Figure 2, the support structure 1 may, for example, be tied to the ceiling 3 of a building (e.g., by means of one or more brackets 3' or other attachment means such as cables or the like) and thus being arranged to extend horizontally and distanced from the ceiling itself.

The support structure 1 includes a first and a second profile 4 and 5 longitudinally side by side which each other. As previously mentioned, the profiles are arranged to extend horizontally, however, in further use conditions they could be tied to a vertical wall.

Each of profiles 4 and 5 faces the opposing profile and defines a respective anchoring seat 6 facing the anchoring seat 6 of the other of said profiles: as will be seen later in the description, profiles 4 and 5 may have mirror shapes and in any case each include respective parts similar to those of the other profile.

Profiles 4 and 5 are constrained to each other by a plurality of crossties 7 terminally engaged to the first and second profiles 4 and 5: the crossties 7 shown in the accompanying figures, are all geometrically equal to each other; these crossties are transversally engaged to profiles 4 and 5 and they are transversely spaced apart from each other with respect to the first and second profiles.

The currently preferred solution is for the support structure 2 to have the first and second profiles 4 and 5 arranged parallel to each other: in practice, the first profile extends along a first longitudinal direction of prevalent development and the second profile extends parallel to the first profile along a second longitudinal direction of prevalent development parallel to the first direction, with the crossties equally spaced with each other and arranged perpendicular to the profiles 4 and 5.

It should also be noted that cables or pipes or other elongated bodies that may be supported by the structure 1 may simply be resting on the crossties 7 or may be constrained to the crossties for example by clamps 10.

From a structural point of view, the first and second profiles are made, preferably by a pultrusion process, of composite material: each profile thus includes a plastic resin matrix in which fibers of reinforcing material are embedded. Thanks to the pultrusion process, the reinforcing fibers are continuous and extend full length along the entire longitudinal development of the profiles: these fibers are directed parallel to each other along the longitudinal extension of the respective profile. The plastic resin matrix is actually made of a polymer resin that includes at least one thermosetting resin and/or one thermoplastic resin; in particular the polymer resin includes at least one selected from the group of the following materials: polyester, epoxy resin, acrylic resin, vinyl ester, phenolic resin, PVC, polyurethane, polyethylene. Reinforcing fibers, on the other hand, can be selected from: glass fibers, carbon fibers, synthetic fibers, basalt fibers.

Advantageously, reinforcing fibers are present within the resin in a weight percentage greater than 40%, specifically in a weight percentage comprised between 40% percent and 90%, preferably around 60%.

Crossties 7 can also be made of a pultruded profile by using the above-described materials (plastic matrix + fibers) in connection with the profiles 4 and 5. The pultruded profile intended for forming the crossties 7 will then be transversally cut and machined for making the grooves described in the following. The materials described above give to the profiles 4 and 5 and to the sleepers 7 excellent mechanical properties and excellent thermal and electrical insulation properties.

Concerning the geometry of the first and second profiles 4 and 5, it is noted that the profiles 4 and 5 are geometrically mirrored, each comprising a main wall 8, which in the case exemplified in the drawings, is a flat wall of constant thickness. From the main wall of each profile 4 and 5 emerges a base wall 9 directed transversely, and preferably orthogonally, to the main wall: as shown in the drawings the base wall 9 extends from a longitudinal edge 8a (which in the figures is a lower longitudinal edge) of the main wall.

From the main wall 8, on the same flank having the base wall 9, an auxiliary wall 11 also extends emerging transversely from the main wall (and preferably parallel to the base wall 9 and thus orthogonal to the main wall 8). The auxiliary wall 11 is arranged at a predetermined distance from the base wall so as to form, in cooperation with the base wall, the aforementioned anchoring seat 6 for the crossties 7.

Concerning the geometry of the first and second profiles 4 and 5, it should also be noted that the main wall 8 of each of the first and second profiles extends beyond the auxiliary wall 11, on the opposite side from the base wall, to define, in cooperation with the crossties 7 a housing compartment 12 for cables and/or pipes and/or other elongated bodies. The housing compartment 12 is arranged, in the condition of ceiling use of the structure 1 (see Figure 2), over the crossties themselves and, therefore, above the anchoring seats 6 where the ends of the crossties engage.

Each of the profiles 4 and 5 also includes a top wall 13 emerging transversely from the main wall 8, on the same flank of the profile having the base wall 9 and auxiliary wall 11. In particular, the top wall 13 emerges from a longitudinal top edge 8b, opposed to edge 8a, of the main wall 8 and is arranged perpendicular to the main wall 8 and then parallel to the base wall 9 and the auxiliary wall 11 of each profile. In other words, the top wall 13, the auxiliary wall 11 and the base wall 9 of each profile 4 and 5 extend on the same flank of each profile and are directed toward each other of said first and second profiles 4 and 5.

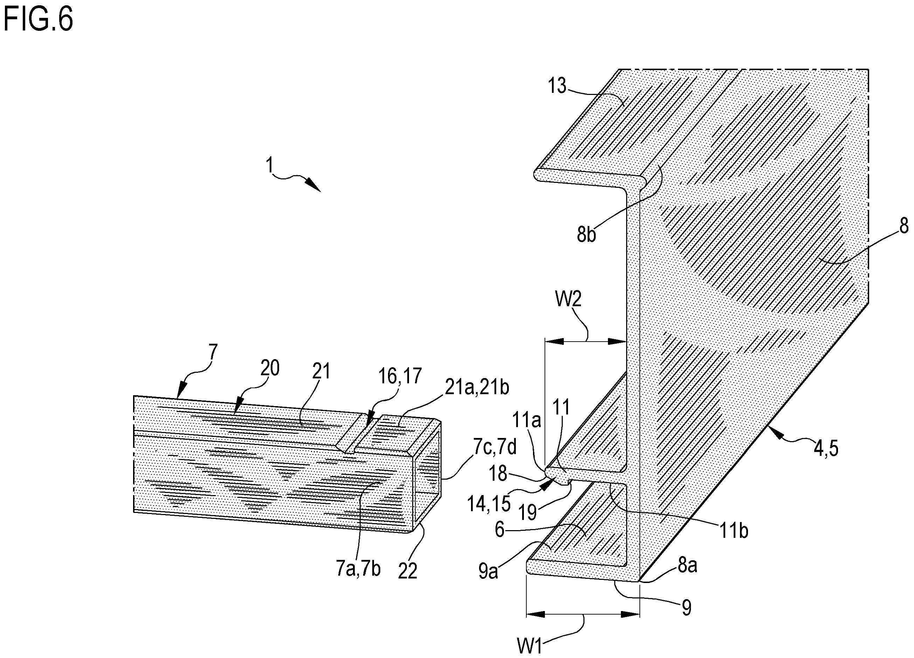

In the preferred embodiment for example shown in Figure 6, the base wall 9 and optionally the top wall 13, extend according to an equal width W1 transversely to the main wall 8, while the auxiliary wall 11 extends transversely to the main wall 8 according to a width W2 that is slightly lower than the width of the base wall 8a. The main wall 8, base wall 9 and auxiliary wall 11 of each profile 4 and 5 extend the full length of the respective first and second profiles. In particular, the base wall 9 and the auxiliary wall 11 both have a constant cross-sectional profile throughout the longitudinal development respectively of the first and second profiles 4, 5.

According to a further aspect, the auxiliary wall 11 is interposed between the base wall 9 and the top wall 11, and in particular is significantly closer to the base wall 9 than to the top wall 13, so that the size of the anchoring seat 6 is significantly smaller than the size of the compartment 12 housing cables and/or pipes.

According to one aspect, the coupling of the crossties with the profiles 4 and 5 is obtained at the anchoring seat 6, wherein each crosstie 7 has a first end 7a inserted into the anchoring seat 6 of the first profile 4 and a second end 7b, opposite to the first end, inserted into the anchoring seat 6 of the second profile 5.

The first end of each of the crossties 7 forms, at the anchoring seat 6 on the first profile 4, a mechanical interfering engagement with at least one of the base wall 9 and the auxiliary wall 11 of the first profile. In detail, the auxiliary wall 11 of the first profile has a respective first stop projection 14 emerging inward from the respective anchoring seat 6 on the first profile. The first end 7a of each of the crosstie has in turn at least one shaped portion cooperating with the first stop projection that engages with the shaped portion and forms a stable mechanical coupling between the end 7a of the crosstie and the anchoring seat and thus the first profile 4.

Similarly, the second end 7b of each crosstie 7 forms, at the anchoring seat 6 on the second profile 5, a mechanical interfering engagement with at least one of the base wall 9 and the auxiliary wall 11 of the second profile. In particular, the auxiliary wall 11 of the second profile has a second stop projection 15 emerging inward from the respective anchoring seat 6 on the second profile 5. The second end 7b of each of the crossties 7 has in turn at least one shaped portion cooperating with the second stop projection 15 that engages with the shaped portion and forms a stable mechanical coupling between the end 7b of the crosstie and the anchoring seat and thus the first profile 4.

As can be seen from Figure 6 (to which reference is made for both the coupling of the first end 7a of the crosstie to the first profile 4 and the coupling of the second end 7b of the crosstie 7 to the second profile being the two couplings absolutely analogous), the shaped portion of the first end 7a of each of the crossties 7 includes a first groove 16 parallel to a longitudinal development direction of the first stop projection 14, while the shaped portion of the second end 7b of each of the crossties includes a second groove 17 parallel to a longitudinal development direction of the second stop projection 15.

It should be noted that the first stop projection 14 extends along the auxiliary wall 11 of the first profile, in particular, it continuously extends along the entire auxiliary wall of the first profile 4, straight and parallel to the first longitudinal direction of prevalent development of the first profile itself; similarly, the second stop projection 15 extends along the auxiliary wall 11 of the second profile 5, in particular extending continuously along the entire auxiliary wall of the second profile, straight and parallel to the first longitudinal direction of prevalent development of the second profile itself. In this way, each crosstie 7 can be coupled at any longitudinal position along the first and second profiles 4 and 5, simply by engaging the end portions 7a, 7b of each crosstie in the respective anchoring seat 6.

Concerning the geometry of each stop projection 14 and 15, it should be noted that the first stop projection 14 emerges from an end edge 11a of auxiliary wall 11 of the first profile 4, and the second stop projection 15 emerges from an end edge 11a of auxiliary wall 11 of the second profile 5. In particular, each of said projections 14 and 15 (which are identical in the example shown) includes a respective guide portion 18 that emerges from the end edge 11a of the auxiliary wall of the first profile 4 or from the second profile. The guide portion 18 has increasing, in particular linearly increasing, thickness proceeding from the end edge 11a of the auxiliary wall 11 and proceeding towards the main wall 8 of the profile. Each of the projections 14 and 15 also has a respective clamping portion 19, consecutive to the guide portion 18 and insertable into the first groove 16 (or the second groove 17). As shown in Figure 6, the clamping portion 19 has a step portion having variable thickness, increasing proceeding internally towards anchoring seat 6 to define an undercut that prevents the removal of the projections 14, 15 when coupled with the respective groove 16, 17. It should also be noted that the first and second projections 14 and 15 both have a constant cross-section profile throughout the longitudinal development respectively of the first and second profile 4, 5.

The first groove and second grooves 16, 17 of each crosstie extend full width on a same side 20 of the crosstie 7, for allowing both stop teeth 14 and 15 to be easily inserted into their respective grooves during assembly.

Referring to the geometry of the crossties (which, as mentioned above, are preferably also made by pultrusion), it can be seen that each crosstie 7 has, at least at the first end 7a, a planar flank 21 over which the first groove 15 extends, which runs across the whole of the same plane flank of the crosstie parallel to the direction of longitudinal development of the first projection. Similarly, each crosstie has, at least at the second end 7b, a similar flat flank 21 (co-planar or coincident with the flat flank where the first groove is arranged) over which extends the second groove 16, which runs through the entire flat flank of the crosstie parallel to the direction of longitudinal development of the second projection. The flatness of the flank 21 of the crosstie at least at the ends 7a and 7b (and preferably along the entire length of the crosstie) allows, once the ends 7a and 7b of the crosstie 7 have been engaged in their respective seats 6, to have a flat abutting surface with a lower surface 11b, also flat, of the auxiliary wall of each profile. The contact between the lower surface 11b of the auxiliary wall 11 with the crosstie, and in particular with the first or second flat facet 21a, 21b described below, allows frictional forces to arise between the lower surface 11b and the crosstie, such that to limit the relative displacement between profile and crosstie and strengthening the coupling even in the presence of vertical loads applied on the crosstie 7.

According to a further aspect, each crosstie 7 is in the form of a tubular profile (on which grooves 14 and 15 are manufactured by means of material removal or hot deformation) with a polygonal cross-section, optionally having square or rectangular profile, so that the crosstie itself has flat faces transversal to each other that fit terminally into the respective seat 6 with a respective bottom face 7c, 7d of each crosstie that optionally acts abutting against a flat inner surface of the main wall 8.

Each crosstie also has, at least at each end 7a, 7b, a further flat flank 22 opposite to the flat flank 21, on which the first and second grooves 16, 17 extend. Similarly to what has been described with reference to the flat flank 21, the flatness of the further flat flank 22 of the crosstie allows, once the ends 7a and 7b of the crosstie 7 have been engaged in their respective anchoring seats 6, to have a flat abutting surface with an upper surface 9a of a respective base wall 9 of the first and second profiles 4, 5. As for example shown in figure 6, the upper surface 9a of the base walls 9 of the first and second profiles has an entirely flat surface facing the auxiliary wall of the respective first and second profiles 4, 5. In other words, each base wall 9 is devoid of protuberances emerging from a respective upper surface 9a directed towards the anchoring seat 6.

In practice, each crosstie 7 has at the first end 7a, opposing flat flanks 21, 22 contacting respectively a flat lower surface 11b of auxiliary wall 11 and an upper surface 9a entirely flat of the base wall 9 of the first profile 4. Similarly, each crosstie 7 has at the second end 7b, opposing flat flanks 21, 22 contacting respectively a lower surface 11b of auxiliary wall 11 and an upper surface 9a of the base wall of the second profile 5.

It should be noted that providing a base walls 9 having respective upper surfaces 9a entirely flat and facing a respective auxiliary wall 11 on which a stop projection is defined, has the dual effect of allowing a snap engagement between a crosstie and any portion of the profile, as well as of maximizing the contact area between the profile and the crosstie in order to reduce any relative displacement between the two. Such feature gives the support structure a high degree of rigidity and flexibility of use, as the entirely flat upper surface 9a allows the crossties to be positioned between them at any distance selectable by the user and not constrained by the specific construction structure of profiles and crossties.

Further referring to Figure 6, the first end 7a of each crosstie 7 has the respective first groove 16 arranged perpendicular to the main development direction of the crosstie itself (and parallel to the development direction of the first projection placed on the first profile) and the first bottom face 7c placed in a plane perpendicular to the main development direction of the crosstie itself. A first flat facet 21a is thus defined adjacent to the first groove 16 and extending between the first groove itself and the first bottom face 7c. In particular, such first flat facet 21a contacts the bottom surface 11b of the auxiliary wall of the first profile 4 and fits at a first strip of such bottom surface 11b arranged between the first projection 14 and the main wall 8. Similarly, the second end 7b of each crosstie has the second groove arranged 17 perpendicular to the main development direction of the crosstie itself (and parallel to the development direction of the second projection 15 placed on the second profile 5), with the second end face 7d, opposed to the first end face 7c of the same crosstie 7, arranged in a plane perpendicular to the main development direction of the crosstie itself. At the second end face 7b is defined a second flat facet 21b adjacent to the second groove 17 and extending between the second groove itself and the second end face 7d. The second flat facet is positioned in contact with the lower surface 11b of the auxiliary wall of the second profile 5, at a second strip of the lower surface, between the second projection 15 and the main wall 8.

According to a further aspect, the lateral extension of the first facet 21a, measured perpendicular to the first bottom face 7c of each crosstie, is substantially equal to the width of the first strip and, similarly, the lateral extension of the second facet 21b, measured perpendicular to the second bottom face 7d of each crosstie, is substantially equal to the width of the second strip.

Finally, according to a variant shown in Figure 3, the structure 1 may include a lower cover 23 and/or an upper cover 24 constrained to structure 1 and in particular to the profiles 4 and 5 so as to close or protect the compartment 12.

### PRODUCTION PROCESS and INSTALLATION PROCESS.

After what has been previously detailed in a structural manner, now follows a description of a production process and an installation process of a structure 1 as described above or according to any of the accompanying claims.

For manufacturing the structure 1, the first and second profiles are made by pultrusion, for example, using the plastic resin matrix and reinforcing fibers described above. Crossties are also (before, after or simultaneously) made, which are then terminally joined to the two profiles 4 and 5. The crossties 7 may also be defined by a profile manufactured in the materials described above (plastic matrix and fibers) obtained by pultrusion. The pultruded profile intended for the formation of crossties 7 will then be transversally cut and machined to form the grooves 16 and 17, which may be obtained by material removal (e.g., by milling) or by hot deformation of the areas where the grooves are to be formed.

It should be noted that the grooves may be alternately made before transversally cutting the pultruded semifinished product that will form the crossties 7. Following making of the crossties 7, follows coupling the first ends of a plurality of crossties with the anchoring seat of the first profile and the second ends of said plurality of crossties with the anchoring seat of the second profile, so as to arrange the first and second profiles parallel to each other and the crossties spaced apart along the longitudinal development of the first and second profiles.

At this coupling stage, the first and second projections 14 and 15 snap into the first and second grooves 16 and 17 respectively, while the first and second facets 21a and 2b abut against the lower surface 11b of auxiliary wall 11.

According to one aspect of the invention, the first and second ends of the crossties are not glued with the first and second profiles respectively. However, it is not excluded the possibility of facilitating the coupling by means of glue between said ends 7a, 7b and seats 6 of the profiles 4 and 5.

According to a further aspect, the first and second ends 7a, 7b of the crossties are not engaged at the first and second profiles 4 and 5 respectively, by additional mechanical means (additional to the composite components described above, i.e., crossties and profiles) such as screws, bolts, nails or rivets, metal or composite pins. However, it is not excluded that in some applications may additionally be used one or more of screws or bolts or rivets or other for further strengthening the crosstie-profile coupling.

Once structure 1 has been obtained, the installation of the same structure follows. An installation process may involve constraining the support structure to a ceiling or a wall of a building, so that the first and second profiles 4 and 5 extend horizontally with the anchoring seat 6 arranged in a lower area of the first and second profiles themselves. Following to or prior to constraining the structure to a wall or a ceiling, cables and/or pipes can be placed over the crossties 7, and then loaded on the structure 1, so that the weight of said cables and/or pipes, tend to bend each of said crossties, pushing in further engagement said first and second projections 14 and 15 into the respective first and second grooves 16 and 17 of each crosstie 7.

Finally, the lower cover 23 and/or the upper cover 24 can be affixed: such cover(s) can be constrained to the structure 1 and in particular to the profiles 4 and 5, e.g. by mechanical locking or gluing, so as to close and/or protect the compartment 12.

## Claims

1. Support structure for cables and/or pipes including:
- a first and a second profile (4, 5) longitudinally side by side, each of said profiles (4, 5) defining at least one respective anchoring seat (6) facing the anchoring seat (6) of the other of said profiles (5, 4);
- a plurality of crossties (7) engaged to the first and second profiles (4, 5), said crossties (7) being spaced apart from each other and arranged transversely to the first and second profiles (4, 5);
wherein each of said crossties (7) has a first end (7a) inserted in the anchoring seat (6) of the first profile (4) and a second end (7b), opposite to the first end (7a), inserted in the anchoring seat (6) of the second profile (5);
wherein each of said first and second profiles (4, 5) comprises:
- a main wall (8),
- a base wall (9) projecting transversely from the main wall (8), and
- an auxiliary wall (11), also transversely emerging from the main wall (8), at a predetermined distance from the base wall (9), said auxiliary wall (11) cooperating with the base wall (9) to define said anchoring seat (6);
wherein:
- the auxiliary wall (11) of the first profile (4) has a respective first stop projection (14) emerging inward from the anchoring seat (6) on the first profile (4), the first end (7a) of each of the crossties (7) having at least one shaped portion cooperating with said respective first stop projection (14);
- the auxiliary wall (11) of the second profile (5) has a second stop projection (15) emerging inward from the anchoring seat (6) on the second profile (5), and wherein the second end (7b) of each of the crossties (7) has at least one shaped portion cooperating with the second stop projection (15);
wherein:
- the shaped portion of the first end (7a) of each of the crossties (7) comprises a first groove (16) parallel to a longitudinal development direction of the first stop projection (14); and
- the shaped portion of the second end (7b) of each of the crossties (7) comprises a second groove (17) parallel to a longitudinal development direction of the second stop projection (15),
**characterized in that**
each crosstie (7) is in the form of a tubular profile having a polygonal cross-section, wherein each crosstie (7) has:
- at the first end (7a) opposing flat flanks (22) contacting respectively a lower surface of the auxiliary wall (11) and an upper surface of the base wall (9) of the first profile (4); and
- at the second end (7b) opposing flat flanks (22) contacting respectively a lower surface of the auxiliary wall (11) and an upper surface of the base wall (9) of the second profile (5);
and wherein:
- the upper surface (9a) of the base wall (9) of the first profile (4) is entirely flat and in contact with the flat flank (22) of the first end (7a) of the crosstie (7) facing the base wall (9) of the first profile (4); and
- the upper surface (9a) of the base wall (9) of the second profile (5) is in contact with the flat flank (22) of the second end (7b) of the crosstie (7) facing the base wall (9) of the second profile (5).

2. Support structure according to claim 1, wherein said first profile (4) extends along a first longitudinal direction of prevalent development and wherein said second profile (5) extends parallel to said first profile (4) along a second longitudinal direction of prevalent development; and
wherein said main wall (8), said base wall (9) and said auxiliary wall (11) of each profile extend entirely throughout the respective first and second profiles (4, 5).

3. Support structure according to claim 1 or 2, wherein:
- the first end (7a) of each of said crossties (7) forms, at the anchoring seat (6) on the first profile (4), a mechanically interfering engagement with at least one of the base wall (9) and the auxiliary wall (11) of the first profile (4); and
- the second end (7b) of each of said crossties (7) forms, at the anchoring seat (6) on the second profile (5), a mechanically interfering engagement with at least one of the base wall (9) and the auxiliary wall (11) of the second profile (5).

4. Support structure according to claim 1, wherein:
- the first stop projection (14) extends along the auxiliary wall (11) of the first profile (4), continuously along the entire auxiliary wall (11) of the first profile (4), in a rectilinear manner and parallel to the first longitudinal direction of prevalent development of the first profile (4) itself;
- the second stop projection (15) extends along the auxiliary wall (11) of the second profile (5), continuously along the entire auxiliary wall (11) of the second profile (5), in a rectilinear manner and parallel to the first longitudinal direction of prevalent development of the second profile (5) itself.

5. Support structure according to claim 1 or 4, wherein:
- the first stop projection (14) emerges from an end edge of the auxiliary wall (11) of the first profile (4); and
- the second stop projection (15) emerges from an end edge of the auxiliary wall (11) of the second profile (5);
further wherein
- the first projection (14) comprises:
∘ a respective guide portion (18) extending from the end edge of the auxiliary wall (11) of the first profile (4) and having an increasing, in particular linearly increasing, thickness proceeding from the end edge of the auxiliary wall (11) towards the main wall (8) of the first profile (4), and
∘ a respective clamping portion (19) consecutive to the guide portion (18) and intended to snap into the first groove (16), said clamping portion (19) defining a thickness variation shaped as a step in said auxiliary wall (11) of the first profile (4); and
- the second projection (15) comprises:
∘ a respective guide portion (18) extending from the end edge of the auxiliary wall (11) of the second profile (5) and having an increasing, in particular linearly increasing, thickness proceeding from the end edge of the auxiliary wall (11) towards the main wall (8) of the second profile (5), and
∘ a respective clamping portion (19) consecutive to the guiding portion (18) and intended to snap into the second groove (17), said clamping portion (19) defining a thickness variation shaped as a step in said auxiliary wall (11) of the second profile (5).

6. Support structure according to any one of the preceding claims, wherein each of said first and second profiles (4, 5) provides that, in cross section, the respective main wall (8) extends beyond the auxiliary wall (11) on the opposite side with respect to the base wall (9) to define, in cooperation with said crossties (7) a housing compartment (12) for said cables and/or pipes positioned, in a condition of ceiling use of the structure, above said crossties (7);
and wherein each of said first and second profiles (4, 5) includes a top wall (13) transversely emerging from said main wall (8), optionally from a longitudinal top edge of said main wall (8), and wherein said top wall (13), said auxiliary wall (11) and said base wall (9) of each of said first and second profiles (5) extend towards the other of said first and second profiles (4, 5);
in particular wherein said top wall, said auxiliary wall (11) and said base wall (9) of each of said first and second profiles (4, 5) extend perpendicularly to, and on the same side of, the main wall (8).

7. Support structure according to any one of the preceding claims, wherein the first groove (16) of each crosstie (7) extends full width on one side of the crosstie (7), and wherein the second groove (17) of each crosstie (7) extends full width on the same side of the crosstie (7) itself;
in which each crosstie (7) has, at least at the first end (7a), a flat flank on which the first groove (16) extends, which crosses the whole flat flank of the crosstie (7) parallel to the direction of longitudinal development of the first projection (14);
and in which each crosstie (7) has, at least in correspondence of the second end (7b), a flat flank on which the second groove (17) extends, which crosses the whole flat flank of the crosstie (7) parallel to the direction of longitudinal development of the second projection (15).

8. Support structure according to any one of the preceding claims, wherein the first end (7a) of each crosstie (7) has:
- the first groove (16) arranged perpendicularly to the main development direction of the crosstie (7) itself and parallel to the development direction of the first projection (14) placed on the first profile (4),
- a first end face placed in a plane perpendicular to the main development direction of the crosstie (7) itself,
- a first flat facet adjacent to the first groove (16) and extending between the first groove (16) and the first end face, said first flat facet being positioned in contact with the lower surface of the auxiliary wall (11) of the first profile (4), at a first strip of said lower surface between the first projection (14) and the main wall (8)
and wherein the second end (7b) of each crosstie (7) has:
- the second groove (17) is arranged perpendicularly to the main development direction of the crosstie (7) itself and parallel to the development direction of the second projection (15) placed on the second profile (5),
- a second end face, opposed to the first end face of the same crosstie (7), placed in a plane perpendicular to the main development direction of the crosstie (7) itself,
- a second flat facet adjacent to the second groove (17) and extending between the second groove (17) and the second end face, said second flat facet being positioned in contact with the lower surface of the auxiliary wall (11) of the second profile (5), in correspondence with a second strip of said lower surface between the second projection (15) and the main wall (8),
wherein the lateral extension of the first facet, measured perpendicular to the first end face of each crosstie (7), is substantially equal to the width of the first strip, and
wherein the lateral extension of the second facet, measured perpendicularly to the second end face of each crosstie (7) is substantially equal to the width of the second strip.

9. Support structure according to any one of the preceding claims, wherein each of said first and second profiles (4, 5) is made by pultrusion of composite material comprising a plastic resin matrix in which are embedded fibers of reinforcing material directed along the longitudinal extension of the profile;
wherein each of said crossties is made, by pultrusion, of composite material comprising a plastic resin matrix in which are embedded fibers of reinforcing material directed along the longitudinal extension of said crosstie (7) and thus transversely, in particular perpendicularly, to the longitudinal extension of each of said first and second profiles (4, 5).

10. Support structure according to any one of the preceding claims, wherein the base walls (9) of the first and second profiles (4, 5) have respective upper surfaces (9a) entirely flat facing the auxiliary wall (11) and in contact with a respective flat flank of said crossties, wherein each base wall (9) of the first and second profiles (4, 5) has no protuberances emerging from the upper surface (9a) of a respective base wall (9) of the first and second profiles (4, 5).

11. Support structure according to the preceding claim, wherein each auxiliary wall (11) of the respective first and second profiles (4, 5) has a bottom surface (11b) in interposition between the respective first and second projections (14, 15) and the main wall (8) of the respective first and second profiles (4, 5),
wherein the lower surface (11b) of the auxiliary wall of the first profile (4) is entirely flat and in contact with a flat flank (21) of the first end (7a) of the crosstie (7) facing the auxiliary wall (11) of the first profile (4),
wherein the lower surface (11b) of the auxiliary wall of the second profile (5) is entirely flat and in contact with a flat flank (21) of the second end (7b) of the crosstie (7) facing the auxiliary wall (11) of the second profile (5).

12. A process of manufacturing a support structure according to any one of claims 1 to 11, comprising:
- manufacturing by pultrusion the first and second profiles (4, 5);
- coupling the first ends of a plurality of crossties (7) with the anchoring seat (6) of the first profile (4) and the second ends of said plurality of crossties (7) with the anchoring seat (6) of the second profile (5) so as to arrange the first and second profiles (4, 5) parallel to each other and the crossties (7) spaced apart along the longitudinal development of the first and second profiles (4, 5).

13. The process of claim 12, wherein the first and second ends of the crossties (7) are neither glued to the first or second profile (4, 5), nor are they engaged to the first or second profile (4, 5) by further mechanical means additional to the crossties and profiles.

## Patentansprüche

1. Halterungsstruktur für Kabel und/oder Rohre, umfassend:
- ein erstes und ein zweites Profil (4, 5), welche longitudinal nebeneinander angeordnet sind, wobei jedes der Profile (4, 5) wenigstens einen jeweiligen Verankerungssitz (6) definiert, welcher dem Verankerungssitz (6) des anderen der Profile (4, 5) zugewandt ist;
- eine Mehrzahl von Querverbindungen (7), welche in das erste und das zweite Profil (4, 5) eingreifen, wobei die Querverbindungen (7) voneinander beabstandet sind und transversal zu dem ersten und dem zweiten Profil (4, 5) angeordnet sind;
wobei jede der Querverbindungen (7) ein erstes Ende (7a), welches in den Verankerungssitz (6) des ersten Profils (4) eingesetzt ist, und ein zweites Ende (7b) aufweist, welches dem ersten Ende (7a) entgegengesetzt ist, welches in den Verankerungssitz (6) des zweiten Profils (5) eingesetzt ist;
wobei jedes des ersten und des zweiten Profils (4, 5) umfasst:
- eine Hauptwandung (8),
- eine Grundwandung (9), welche von der Hauptwandung (8) transversal vorsteht, und
- eine Hilfswandung (11), welche ebenso aus der Hauptwandung (8) transversal hervorgeht, an einer vorbestimmten Distanz von der Grundwandung (9), wo die Hilfswandung (11) mit der Grundwandung (9) kooperiert, um den Verankerungssitz (6) zu definieren;
wobei:
- die Hilfswandung (11) des ersten Profils (4) einen entsprechenden ersten Haltevorsprung (14) aufweist, welcher nach innen von dem Verankerungssitz (6) hervorgeht, an dem ersten Profil (4), wobei das erste Ende (7a) jeder der Querverbindungen (7) wenigstens einen geformten Abschnitt aufweist, welcher mit dem entsprechenden ersten Haltevorsprung (14) kooperiert;
- die Hilfswandung (11) des zweiten Profils (5) einen zweiten Haltevorsprung (15) aufweist, welcher nach innen von dem Verankerungssitz (6) hervorgeht, an dem zweiten Profil (5), wobei das zweite Ende (7b) jeder der Querverbindungen (7) wenigstens einen geformten Abschnitt aufweist, welcher mit dem zweiten Haltevorsprung (15) kooperiert;
wobei:
- der geformte Abschnitt des ersten Endes (7a) jeder der Querverbindungen (7) eine erste Nut (16) umfasst, welche parallel zu einer longitudinalen Entwicklungsrichtung des ersten Haltevorsprungs (14) ist; und
- der geformte Abschnitt des zweiten Endes (7b) jeder der Querverbindungen (7) eine zweite Nut (17) umfasst, welche parallel zu einer longitudinalen Entwicklungsrichtung des zweiten Haltevorsprungs (15) ist,
**dadurch gekennzeichnet, dass**
jede Querverbindung (7) in der Form eines rohrförmigen Profils ist, welches einen polygonalen Querschnitt aufweist, wobei jede Querverbindung (7) aufweist:
- an dem ersten Ende (7a), entgegengesetzte ebene Flanken (22), welche jeweils eine untere Fläche der Hilfswandung (11) und eine obere Fläche der Grundwandung (9) des ersten Profils (4) kontaktieren; und
- an dem zweiten Ende (7b), entgegengesetzte ebene Flanken (22), welche jeweils eine untere Fläche der Hilfswandung (11) und eine obere Fläche der Grundwandung (9) des zweiten Profils (5) kontaktieren;
und wobei:
- die obere Fläche (9a) der Grundwandung (9) des ersten Profils (4) vollkommen eben ist und mit der ebenen Flanke (22) des ersten Endes (7a) der Querverbindung (7) in Kontakt steht, welche der Grundwandung (9) des ersten Profils (4) zugewandt ist; und
- die obere Fläche (9a) der Grundwandung (9) des zweiten Profils (5) mit der ebenen Flanke (22) des zweiten Endes (7b) der Querverbindung (7) in Kontakt steht, welche der Grundwandung (9) des zweiten Profils (5) zugewandt ist.

2. Halterungsstruktur nach Anspruch 1, wobei sich das erste Profil (4) entlang einer ersten longitudinalen Richtung einer vorwiegenden Entwicklung erstreckt und wobei sich das zweite Profil (5) parallel zu dem ersten Profil (4) entlang einer zweiten longitudinalen Richtung einer vorwiegenden Entwicklung erstreckt; und wobei sich die Hauptwandung (8), die Grundwandung (9) und die Hilfswandung (11) jedes Profils vollständig über das entsprechende erste und zweite Profil (4, 5) erstrecken.

3. Halterungsstruktur nach Anspruch 1 oder 2, wobei:
- das erste Ende (7a) jeder der Querverbindungen (7) an dem Verankerungssitz (6) an dem ersten Profil (4) einen mechanischzusammenwirkenden Eingriff mit wenigstens einer aus der Grundwandung (9) und der Hilfswandung (11) des ersten Profils (4) bildet; und
- das zweite Ende (7b) jeder der Querverbindungen (7) an dem Verankerungssitz (6) an dem zweiten Profil (5) einen mechanischzusammenwirkenden Eingriff mit wenigstens einer aus der Grundwandung (9) und der Hilfswandung (11) des zweiten Profils (5) bildet.

4. Halterungsstruktur nach Anspruch 1, wobei:
- sich der erste Haltevorsprung (14) entlang der Hilfswandung (11) des ersten Profils (4) erstreckt, kontinuierlich entlang der ganzen Hilfswandung (11) des ersten Profils (4), in einer geradlinigen Weise und parallel zu der ersten longitudinalen Richtung einer vorwiegenden Entwicklung des ersten Profils (4) selbst;
- sich der zweite Haltevorsprung (15) entlang der Hilfswandung (11) des zweiten Profils (5) erstreckt, kontinuierlich entlang der ganzen Hilfswandung (11) des zweiten Profils (5), in einer geradlinigen Weise und parallel zu der ersten longitudinalen Richtung einer vorwiegenden Entwicklung des zweiten Profils (5) selbst.

5. Halterungsstruktur nach Anspruch 1 oder 4, wobei:
- der erste Haltevorsprung (14) aus einem Endrand der Hilfswandung (11) des ersten Profils (4) hervorgeht; und
- der zweite Haltevorsprung (15) aus einem Endrand der Hilfswandung (11) des zweiten Profils (5) hervorgeht;
wobei ferner
- der erste Vorsprung (14) umfasst:
- einen entsprechenden Führungsabschnitt (18), welcher sich von dem Endrand der Hilfswandung (11) des ersten Profils (4) erstreckt und eine ansteigende, insbesondere linear ansteigende, Dicke aufweist, welche von dem Endrand der Hilfswandung (11) zu der Hauptwandung (8) des ersten Profils (4) verläuft, und
- einen entsprechenden Klemmabschnitt (19), welcher auf den Führungsabschnitt (18) folgt und vorgesehen ist, um in die erste Nut (16) einzurasten, wobei der Klemmabschnitt (19) einen Dickenvariation definiert, welche als eine Stufe in der Hilfswandung (11) des ersten Profils (4) geformt ist; und
- der zweite Vorsprung (15) umfasst:
- einen entsprechenden Führungsabschnitt (18), welcher sich von dem Endrand der Hilfswandung (11) des zweiten Profils (5) erstreckt und eine ansteigende, insbesondere linear ansteigende, Dicke aufweist, welche von dem Endrand der Hilfswandung (11) zu der Hauptwandung (8) des zweiten Profils (5) verläuft, und
- einen entsprechenden Klemmabschnitt (19), welcher auf den Führungsabschnitt (18) folgt und vorgesehen ist, um in die zweite Nut (17) einzurasten, wobei der Klemmabschnitt (19) einen Dickenvariation definiert, welche als eine Stufe in der Hilfswandung (11) des zweiten Profils (5) geformt ist.

6. Halterungsstruktur nach einem der vorhergehenden Ansprüche, wobei jedes des ersten und des zweiten Profils (4, 5) dafür sorgt, dass, in einem Querschnitt, sich die entsprechende Hauptwandung (8) über die Hilfswandung (11) hinaus an der entgegengesetzten Seite mit Bezug zu der Grundwandung (9) erstreckt, um, in Kooperation mit den Querverbindungen (7), ein Gehäuseraum (12) für die Kabel und/oder Rohre zu definieren, welche, in einem Zustand einer Deckennutzung der Struktur, über den Querverbindungen (7) positioniert sind;
und wobei jedes des ersten und des zweiten Profils (4, 5) eine Oberwandung (13) umfasst, welche transversal aus der Hauptwandung (8) hervorgeht, optional aus einem longitudinalen Oberrand der Hauptwandung (8), und wobei sich die Oberwandung (13), die Hilfswandung (11) und die Grundwandung (9) von jedem des ersten und des zweiten Profils (5) in Richtung des anderen des ersten und des zweiten Profils (4, 5) erstrecken;
wobei insbesondere sich die Oberwandung, die Hilfswandung (11) und die Grundwandung (9) von jedem des ersten und des zweiten Profils (4, 5) senkrecht zu und an der gleichen Seite von der Hauptwandung (8) erstrecken.

7. Halterungsstruktur nach einem der vorhergehenden Ansprüche, wobei sich die erste Nut (16) jeder Querverbindung (7) über die gesamte Breite auf einer Seite der Querverbindung (7) erstreckt, und wobei sich die zweite Nut (17) jeder Querverbindung (7) über die gesamte Breite auf der gleichen Seite der Querverbindung (7) selbst erstreckt;
in welcher jede Querverbindung (7), wenigstens an dem ersten Ende (7a), eine ebene Flanke aufweist, an welcher sich die erste Nut (16) erstreckt, welche die gesamte ebene Flanke der Querverbindung (7) durchquert, welche parallel zu der Richtung einer longitudinalen Entwicklung des ersten Vorsprungs (14) ist;
und in welcher jede Querverbindung (7), wenigstens in Entsprechung mit dem zweiten Ende (7b), eine ebene Flanke aufweist, an welcher sich die zweite Nut (17) erstreckt, welche die gesamte ebene Flanke der Querverbindung (7) durchquert, welche parallel zu der Richtung einer longitudinalen Entwicklung des zweiten Vorsprungs (15) ist.

8. Halterungsstruktur nach einem der vorhergehenden Ansprüche, wobei das erste Ende (7a) jeder Querverbindung (7) aufweist:
- die erste Nut (16), welche senkrecht zu der Hauptentwicklungsrichtung der Querverbindung (7) selbst angeordnet ist und parallel zu der Entwicklungsrichtung des ersten Vorsprungs (14) ist, welcher an dem ersten Profil (4) platziert ist,
- eine erste Endfläche, welche in einer Ebene senkrecht zu der Hauptentwicklungsrichtung der Querverbindung (7) selbst platziert ist,
- eine erste ebene Facette, welche der ersten Nut (16) benachbart ist und sich zwischen der ersten Nut (16) und der ersten Endfläche erstreckt, wobei die erste ebene Facette mit der unteren Fläche der Hilfswandung (11) des ersten Profils (4) in Kontakt positioniert ist, an einem ersten Streifen der unteren Fläche zwischen dem ersten Vorsprung (14) und der Hauptwandung (8),
und wobei das zweite Ende (7b) jeder Querverbindung (7) aufweist:
- die zweite Nut (17), welche senkrecht zu der Hauptentwicklungsrichtung der Querverbindung (7) selbst angeordnet ist und parallel zu der Entwicklungsrichtung des zweiten Vorsprungs (15) ist, welcher an dem zweiten Profil (5) platziert ist,
- eine zweite Endfläche, entgegengesetzt der ersten Endfläche der gleichen Querverbindung (7), welche in einer Ebene senkrecht zu der Hauptentwicklungsrichtung der Querverbindung (7) selbst platziert ist,
- eine zweite ebene Facette, welche der zweiten Nut (17) benachbart ist und sich zwischen der zweiten Nut (17) und der zweiten Endfläche erstreckt, wobei die zweite ebene Facette mit der unteren Fläche der Hilfswandung (11) des zweiten Profils (5) in Kontakt positioniert ist, übereinstimmend mit einem zweiten Streifen der unteren Fläche zwischen dem zweiten Vorsprung (15) und der Hauptwandung (8),
wobei die seitliche Erstreckung der ersten Facette, welche senkrecht zu der ersten Endfläche jeder Querverbindung (7) gemessen ist, im Wesentlichen gleich zu der Breite des ersten Streifens ist, und
wobei die seitliche Erstreckung der zweiten Facette, welche senkrecht zu der zweiten Endfläche jeder Querverbindung (7) gemessen ist, im Wesentlichen gleich zu der Breite des zweiten Streifens ist.

9. Halterungsstruktur nach einem der vorhergehenden Ansprüche, wobei jedes von dem ersten und dem zweiten Profil (4, 5) durch ein Ziehen von einem Verbundmaterial hergestellt ist, welches eine Kunststoffharzmatrix umfasst, in welcher Fasern von verstärktem Material eingebettet sind, welche entlang der longitudinalen Erstreckung des Profils gerichtet sind;
wobei jede der Querverbindungen durch Ziehen von einem Verbundmaterial hergestellt ist, welches eine Kunststoffharzmatrix umfasst, in welcher Fasern von verstärktem Material eingebettet sind, welche entlang der longitudinalen Erstreckung der Querverbindung (7) gerichtet sind und daher transversal, insbesondere senkrecht, zu der longitudinalen Erstreckung jedes von dem ersten und dem zweiten Profil (4, 5) sind.

10. Halterungsstruktur nach einem der vorhergehenden Ansprüche, wobei die Grundwandungen (9) des ersten und des zweiten Profils (4, 5) jeweilige obere Flächen (9a) aufweisen, welche der Hilfswandung (11) vollständig eben zugewandt sind und mit einer entsprechenden ebenen Flanke der Querverbindungen in Kontakt stehen, wobei jede Grundwandung (9) des ersten und des zweiten Profils (4, 5) keine Protuberanzen aufweist, welche von der oberen Fläche (9a) der entsprechenden Grundwandung (9) des ersten und des zweiten Profils (4, 5) hervorgehen.

11. Halterungsstruktur nach dem vorhergehenden Anspruch, wobei jede Hilfswandung (11) des entsprechenden ersten und des zweiten Profils (4, 5) eine untere Fläche (11b) aufweist, welche zwischen dem entsprechenden ersten und zweiten Vorsprung (14, 15) und der Hauptwandung (8) des entsprechenden ersten und zweiten Profils (4, 5) eingefügt ist,
wobei die untere Fläche (11b) der Hilfswandung des ersten Profils (4) vollständig eben ist und mit einer ebenen Flanke (21) des ersten Endes (7a) der Querverbindung (7) in Kontakt steht, welche der Hilfswandung (11) des ersten Profils (4) zugewandt ist,
wobei die untere Fläche (11b) der Hilfswandung des zweiten Profils (5) vollständig eben ist und mit einer ebenen Flanke (21) des zweiten Endes (7b) der Querverbindung (7) in Kontakt steht, welche der Hilfswandung (11) des zweiten Profils (5) zugewandt ist.

12. Verfahren zum Herstellen einer Halterungsstruktur nach einem der Ansprüche 1 bis 11, umfassend:
- Herstellen durch ein Ziehverfahren des ersten und des zweiten Profils (4, 5);
- Verkoppeln der ersten Enden einer Mehrzahl von Querverbindungen (7) mit dem Verankerungssitz (6) des ersten Profils (4) und der zweiten Enden der Mehrzahl von Querverbindungen (7) mit dem Verankerungssitz (6) des zweiten Profils (5), um das erste und das zweite Profil (4, 5) parallel zueinander und die Querverbindungen (7) voneinander beabstandet entlang der longitudinalen Entwicklung des ersten und des zweiten Profils (4, 5) anzuordnen.

13. Verfahren nach Anspruch 12, wobei das erste und das zweite Ende der Querverbindungen (7) mit dem ersten oder dem zweiten Profil (4, 5) weder verklebt sind noch sind sie in das erste oder das zweite Profil (4, 5) durch weitere mechanische Mittel, zusätzlich zu den Querverbindungen und den Profilen, eingegriffen.

## Revendications

1. Structure de support pour câbles et/ou tuyaux incluant :
- un premier et un second profilé (4, 5) longitudinalement côte-à-côte, chacun desdits profilés (4, 5) définissant au moins un siège d'ancrage (6) respectif faisant face au siège d'ancrage (6) de l'autre desdits profilés (5, 4) ;
- une pluralité de traverses (7) engagées au niveau du premier et du second profilé (4, 5), lesdites traverses (7) étant espacées à l'écart l'une de l'autre et agencées transversalement au premier et au second profilé (4, 5) ;
dans laquelle chacune desdites traverses (7) présente une première extrémité (7a) insérée dans le siège d'ancrage (6) du premier profilé (4) et une seconde extrémité (7b), opposée à la première extrémité (7a), insérée dans le siège d'ancrage (6) du second profilé (5) ;
dans laquelle chacun desdits premier et second profilé (4, 5) comprend :
- une paroi principale (8),
- une paroi de base (9) se projetant transversalement depuis la paroi principale (8), et
- une paroi auxiliaire (11), émergeant également transversalement depuis la paroi principale (8), à une distance prédéterminée de la paroi de base (9), ladite paroi auxiliaire (11) coopérant avec la paroi de base (9) pour définir ledit siège d'ancrage (6) ;
dans laquelle :
- la paroi auxiliaire (11) du premier profilé (4) présente une première projection d'arrêt (14) respective émergeant vers l'intérieur depuis le siège d'ancrage (6) sur le premier profilé (4), la première extrémité (7a) de chacune des traverses (7) ayant au moins une portion mise en forme coopérant avec ladite première projection d'arrêt (14) respective ;
- la paroi auxiliaire (11) du second profilé (5) ayant une seconde projection d'arrêt (15) émergeant vers l'intérieur depuis le siège d'ancrage (6) sur le second profilé (5), et dans laquelle la seconde extrémité (7b) de chacune des traverses (7) présente au moins une portion mise en forme coopérant avec la seconde projection d'arrêt (15) ;
dans laquelle :
- la portion mise en forme de la première extrémité (7a) de chacune des traverses (7) comprend une première rainure (16) parallèle à un sens de développement longitudinal de la première projection d'arrêt (14) ; et
- la portion mise en forme de la seconde extrémité (7b) de chacune des traverses (7) comprend une seconde rainure (17) parallèle à un sens de développement longitudinal de la seconde projection d'arrêt (15),
**caractérisée en ce que**
chaque traverse (7) se présente sous la forme d'un profilé tubulaire ayant une section transversale polygonale, dans laquelle chaque traverse (7) présente:
- au niveau de la première extrémité (7a) des flancs plats (22) opposés contactant respectivement une surface inférieure de la paroi auxiliaire (11) et une surface supérieure de la paroi de base (9) du premier profilé (4) ; et
- au niveau de la seconde extrémité (7b) des flancs plats (22) opposés contactant respectivement une surface inférieure de la paroi auxiliaire (11) et une surface supérieure de la paroi de base (9) du second profilé (5) ;
et dans laquelle :
- la surface supérieure (9a) de la paroi de base (9) du premier profilé (4) est entièrement plate et se trouve en contact avec le flanc plat (22) de la première extrémité (7a) de la traverse (7) faisant face à la paroi de base (9) du premier profilé (4) ; et
- la surface supérieure (9a) de la paroi de base (9) du second profilé (5) se trouve en contact avec le flanc plat (22) de la seconde extrémité (7b) de la traverse (7) faisant face à la paroi de base (9) du second profilé (5).

2. Structure de support selon la revendication 1, dans laquelle ledit premier profilé (4) s'étend le long d'un premier sens longitudinal de développement prévalent et dans laquelle ledit second profilé (5) s'étend parallèle audit premier profilé (4) le long d'un second sens longitudinal de développement prévalent ; et
dans laquelle ladite paroi principale (8), ladite paroi de base (9) et ladite paroi auxiliaire (11) de chaque profilé s'étendent entièrement à travers le premier et le second profilé (4, 5) respectifs.

3. Structure de support selon la revendication 1 ou 2, dans laquelle :
- la première extrémité (7a) de chacune desdites traverses (7) forme, au niveau du siège d'ancrage (6) sur le premier profilé (4), un engagement mécaniquement interférant avec au moins l'une de la paroi de base (9) et de la paroi auxiliaire (11) du premier profilé (4) ; et
- la seconde extrémité (7b) de chacune desdites traverses (7) forme, au niveau du siège d'ancrage (6) sur le second profilé (5), un engagement mécaniquement interférant avec au moins l'une de la paroi de base (9) et de la paroi auxiliaire (11) du second profilé (5).

4. Structure de support selon la revendication 1, dans laquelle :
- la première projection d'arrêt (14) s'étend le long de la paroi auxiliaire (11) du premier profilé (4), continuellement le long de la paroi auxiliaire (11) entière du premier profilé (4), d'une manière rectiligne et parallèle au premier sens longitudinal de développement prévalent du premier profilé (4) lui-même ;
- la seconde projection d'arrêt (15) s'étend le long de la paroi auxiliaire (11) du second profilé (5), continuellement le long de la paroi auxiliaire (11) entière du second profilé (5), d'une manière rectiligne et parallèle au premier sens longitudinal de développement prévalent du second profilé (5) lui-même.

5. Structure de support selon la revendication 1 ou 4, dans laquelle :
- la première projection d'arrêt (14) émerge depuis un bord d'extrémité de la paroi auxiliaire (11) du premier profilé (4) ; et
- la seconde projection d'arrêt (15) émerge depuis un bord d'extrémité de la paroi auxiliaire (11) du second profilé (5) ;
en outre dans laquelle
- la première projection (14) comprend :
∘ une portion de guidage (18) respective s'étendant depuis le bord d'extrémité de la paroi auxiliaire (11) du premier profilé (4) et ayant une épaisseur croissante, en particulier croissant linéairement, se développant depuis le bord d'extrémité de la paroi auxiliaire (11) vers la paroi principale (8) du premier profilé (4), et
∘ une portion de serrage (19) respective consécutive à la portion de guidage (18) et prévue pour s'enclencher dans la première rainure (16), ladite portion de serrage (19) définissant une variation d'épaisseur mise en forme comme une marche dans ladite paroi auxiliaire (11) du premier profilé (4) ; et
- la seconde projection (15) comprend :
∘ une portion de guidage (18) respective s'étendant depuis le bord d'extrémité de la paroi auxiliaire (11) du second profilé (5) et ayant une épaisseur croissante, en particulier croissant linéairement, se développant depuis le bord d'extrémité de la paroi auxiliaire (11) vers la paroi principale (8) du second profilé (5), et
∘ une portion de serrage (19) respective consécutive à la portion de guidage (18) et prévue pour s'enclencher dans la seconde rainure (17), ladite portion de serrage (19) définissant une variation d'épaisseur mise en forme comme une marche dans ladite paroi auxiliaire (11) du second profilé (5).

6. Structure de support selon l'une quelconque des revendications précédentes, dans laquelle chacun desdits premier et second profilé (4, 5) permet que, en coupe transversale, la paroi principale (8) respective s'étende au-delà de la paroi auxiliaire (11) sur le côté opposé par rapport à la paroi de base (9) pour définir, en coopération avec lesdites traverses (7) un compartiment de logement (12) pour lesdits câbles et/ou tuyaux positionnés, dans un état d'utilisation au plafond de la structure, au-dessus desdites traverses (7) ;
et dans laquelle chacun desdits premier et second profilé (4, 5) inclut une paroi supérieure (13) émergeant transversalement depuis ladite paroi principale (8), éventuellement depuis un bord supérieur longitudinal de ladite paroi principale (8), et dans laquelle ladite paroi supérieure (13), ladite paroi auxiliaire (11) et ladite paroi de base (9) de chacun desdits premier et second profilé (5) s'étendent vers l'autre desdits premier et second profilé (4, 5) ;
en particulier dans laquelle ladite paroi supérieure, ladite paroi auxiliaire (11) et ladite paroi de base (9) de chacun desdits premier et second profilé (4, 5) s'étendent perpendiculairement à, et sur le même côté que, la paroi principale (8).

7. Structure de support selon l'une quelconque des revendications précédentes, dans laquelle la première rainure (16) de chaque traverse (7) s'étend en pleine largeur sur un côté de la traverse (7), et dans laquelle la seconde rainure (17) de chaque traverse (7) s'étend en pleine largeur sur le même côté de la traverse (7) elle-même ;
dans laquelle chaque traverse (7) présente, au moins au niveau de la première extrémité (7a), un flanc plat sur lequel la première rainure (16) s'étend, qui traverse le flanc plat entier de la traverse (7) parallèle au sens de développement longitudinal de la première projection (14) ;
et dans laquelle chaque traverse (7) présente, au moins en correspondance de la seconde extrémité (7b), un flanc plat sur lequel la seconde rainure (17) s'étend, qui traverse le flanc plat entier de la traverse (7) parallèle au sens de développement longitudinal de la seconde projection (15).

8. Structure de support selon l'une quelconque des revendications précédentes, dans laquelle la première extrémité (7a) de chaque traverse (7) présente :
- la première rainure (16) agencée perpendiculairement au sens de développement principal de la traverse (7) elle-même et parallèle au sens de développement de la première projection (14) placée sur le premier profilé (4),
- une première face d'extrémité placée dans un plan perpendiculaire au sens de développement principal de la traverse (7) elle-même,
- une première facette plate adjacente à la première rainure (16) et s'étendant entre la première rainure (16) et la première face d'extrémité, ladite première facette plate étant positionnée en contact avec la surface inférieure de la paroi auxiliaire (11) du premier profilé (4), au niveau d'une première bande de ladite surface inférieure entre la première projection (14) et la paroi principale (8)
et dans laquelle la seconde extrémité (7b) de chaque traverse (7) présente :
- la seconde rainure (17) est agencée perpendiculairement au sens de développement principal de la traverse (7) elle-même et parallèle au sens de développement de la seconde projection (15) placée sur le second profilé (5),
- un seconde face d'extrémité, opposée à la première face d'extrémité de la même traverse (7), placée dans un plan perpendiculaire au sens de développement principal de la traverse (7) elle-même,
- une seconde facette plate adjacente à la seconde rainure (17) et s'étendant entre la seconde rainure (17) et la seconde face d'extrémité, ladite seconde facette plate étant positionnée en contact avec la surface inférieure de la paroi auxiliaire (11) du second profilé (5), en correspondance avec une seconde bande de ladite surface inférieure entre la seconde projection (15) et la paroi principale (8),
dans laquelle l'extension latérale de la première facette, mesurée perpendiculaire à la première face d'extrémité de chaque traverse (7), est sensiblement égale à la largeur de la première bande, et
dans laquelle l'extension latérale de la seconde facette, mesurée perpendiculairement à la seconde face d'extrémité de chaque traverse (7) est sensiblement égale à la largeur de la seconde bande.

9. Structure de support selon l'une quelconque des revendications précédentes, dans laquelle chacun desdits premier et second profilé (4, 5) est fabriqué par pultrusion de matériau composite comprenant une matrice de résine plastique dans laquelle sont enchâssées des fibres d'un matériau de renfort orienté le long de l'extension longitudinale du profilé ;
dans laquelle chacune desdites traverses est fabriquée, par pultrusion, de matériau composite comprenant une matrice de résine plastique dans laquelle sont enchâssées des fibres d'un matériau de renfort orienté le long de l'extension longitudinale de ladite traverse (7) et ainsi transversalement, en particulier perpendiculairement, à l'extension longitudinale de chacun desdits premier et second profilé (4, 5).

10. Structure de support selon l'une quelconque des revendications précédentes, dans laquelle les parois de base (9) du premier et du second profilé (4, 5) présentent des surfaces supérieures (9a) respectives entièrement plates faisant face à la paroi auxiliaire (11) et en contact avec un flanc plat respectif desdites traverses, dans laquelle chaque paroi de base (9) du premier et du second profilé (4, 5) ne présente aucune protubérance émergeant de la surface supérieure (9a) d'une paroi de base (9) respective du premier et du second profilé (4, 5).

11. Structure de support selon la revendication précédente, dans laquelle chaque paroi auxiliaire (11) du premier et du second profilé (4, 5) respectifs présente une surface inférieure (11b) en interposition entre la première et la seconde projection (14, 15) respectives et la paroi principale (8) du premier et du second profilé (4, 5) respectifs,
dans laquelle la surface inférieure (11b) de la paroi auxiliaire du premier profilé (4) est entièrement plate et en contact avec un flanc plat (21) de la première extrémité (7a) de la traverse (7) faisant face à la paroi auxiliaire (11) du premier profilé (4),
dans laquelle la surface inférieure (11b) de la paroi auxiliaire du second profilé (5) est entièrement plate et en contact avec un flanc plat (21) de la seconde extrémité (7b) de la traverse (7) faisant face à la paroi auxiliaire (11) du second profilé (5).

12. Procédé de fabrication d'une structure de support selon l'une quelconque des revendications 1 à 11, comprenant :
- la fabrication par pultrusion du premier et du second profilé (4, 5) ;
- l'accouplement des premières extrémités d'une pluralité de traverses (7) avec le siège d'ancrage (6) du premier profilé (4) et des secondes extrémités de ladite pluralité de traverses (7) avec le siège d'ancrage (6) du second profilé (5) afin d'agencer le premier et le second profilé (4, 5) parallèles l'un à l'autre et aux traverses (7) espacées à l'écart le long du développement longitudinal du premier et du second profilé (4, 5).

13. Procédé selon la revendication 12, dans lequel la première et la seconde extrémité des traverses (7) ne sont ni collées au premier ou au second profilé (4, 5), ni engagées avec le premier ou le second profilé (4, 5) par un moyen mécanique supplémentaire additionnel par rapport aux traverses et aux profilés.
